# EUROPEAN PATENT APPLICATION

(11) **EP 0 848 239 A2**
(43) Date of publication of application: **17.06.1998**
(21) Application number: 97309803.1
(22) Date of filing: 04.12.1997
(51) Int. Cl.: G01M 3/28

(54) **Flue inspection system and a method of inspecting and testing a flue**

(30) Priority: 11.12.1996 GB 9625693
(71) Applicant: BG plc, Reading, Berkshire RG6 1PT (GB)
(72) Inventor: Rose, Michael, Loughborough, Leicestershire, LE11 3SD (GB)
(74) Representative: Morgan, David James

(57) **Abstract**

An inspection system 10 for a flue 2 or flue liner 4 has an inflatable bag arrangement 12 of elastic material for closing the upper end 6 of the flue liner when the bag arrangement 12 is inflated. A lower closure system 16 is provided to close the lower end 8 of the flue liner 4; the closure system 16 comprising a compressible ring of elastomeric material which expands radially outwardly when compressed to close the lower end 8 of the flue liner. A tube 14 acts both as a guide to locate the bag arrangement 12 in place to convey inflating air to the bag arrangement from a pump 15. A tube 23, 28 connects an extractor pump 26 to the interior 24 of the flue liner 6 between the inflated bag arrangement 12 and the closure system 16 so as to reduce the air pressure in the region 24. A sensor 30 observes the rate of extracted air-flow along the pipe 23, 28 and if the flow exceeds a certain value this signifies that there is an unacceptable leak in flue liner 4.

## Description

This invention relates to an inspection system, for testing and inspecting a flue or flue liner, in particular a flue liner, and also relates to a method of inspecting and testing a flue or flue liner.

Domestic flue liners are manufactured from spiral wound corrugated stainless steel, and are generally installed at the time when the appliance using the flue, which may for example be a gas fire or domestic gas boiler, is installed. Flue liners can corrode both from the outside due to leaching of chlorides from mortar and from the inside due to the corrosive action of flue gases. If the corrosion is extensive, this can lead to the collapse and failure of the flue.

When an appliance using a flue is to be replaced or overhauled, it is for safety reasons essential to ensure that the new appliance is equipped with a flue liner which is in good condition, and not damaged in any way, for example either chemically, by corrosion as discussed above, or mechanically.

We believe that there is no system available by which an existing flue liner which is already installed and may have been in service for many years can be inspected to ascertain its condition. It is therfore standard practice, when an appliance is replaced or overhauled, or indeed when a new appliance is installed, to remove the existing flue liner, even though it may in fact be in serviceable condition, and replace it with a new flue liner. Clearly, in many cases this involves the householder in what is in effect unnecessary expense and disruption.

In is an object of the present invention to provide a system for inspecting a flue or flue liner in situ, and to provide a method of inspection.

According to a first aspect of the invention there is provided an inspection system for a flue or flue liner, which flue comprises a first, upper, end open to the atmosphere and second, lower, end adapted to be connected to an appliance, said inspection system comprising upper closure means for closing the upper end of the flue, lower closure means for closing the lower end of the flue, guiding means for guiding the upper end closing means along the flue from the lower end to the upper end, a connector for connecting an extractor adapted to produce reduced pressure in an internal region of the flue between the upper end closing means and the lower end closing means, and a sensor for detecting whether the flow rate from the flue which is closed and under reduced pressure exceeds a predetermined threshold value.

In a preferred embodiment of the system according to the first aspect of the invention, the upper closure means for closing the upper end of the flue comprises an inflatable closure member, which inflatable member is guided along the flue from the lower end to the upper end in a non-inflated condition and is inflated when it is located in its operating position. Where the upper closure means comprises an inflatable closure member, the guiding means for guiding the upper closure means along the flue from the lower end to the upper end further comprises means for allowing the inflatable closure member to be inflated when the inflatable closure member is located in its operating position.

Said inflatable closure member for the upper end of a flue may comprise an inflatable bag, the shape of which when inflated is generally cylindrical, and the outer diameter of said cylinder is such that the inflated bag effectively closes the flue.

The inflatable bag preferably comprises at least one external circumferential rib which extends around the external circumference of the bag and tends to improve the closure of the flue, the liner of which has, as has been stated above, an internal surface which is corrugated. The inflatable bag preferably comprises three external circumferential ribs, spaced along its length.

The inflatable bag is preferably further provided with one or more internal structural features which co-operate with other structure of the upper closure means during and after inflation of the bag to enhance its rigidity of said inflated bag and its ability to close the flue.

In a particular preferred embodiment of the system according to the first aspect of the invention, the upper closure means has an upper end comprising means for mounting a camera.

The lower closure means for closing the lower end of the flue preferably comprises a mechanical expansion unit comprising a compressible ring, for example a rubber ring, between a pair of rigid flanges. The flanges are interconnected by an expansion rod operable so that the flanges can be drawn towards each other, thereby compressing the ring thus tending to expand the ring radially outwardly. Each of the flanges is provided with two apertures, through one of which the means for guiding the upper end closing means along the flue from the lower end to the upper end can be introduced and through the other of which the connector for connecting the extractor adapted to produce reduced pressure in the region of the flue between the upper end closing means and the lower end closing means can be introduced.

In a further preferred embodiment of the system according to the first aspect of the invention, a mechanical inspection device is mounted above the upper closure member. The mechanical inspection device comprises a central body which is mounted substantially axially with respect to the upper closure member and from which one or more resiliently mounted flexible fingers project in a plane which is substantially perpendicular with respect to the axis of the upper closure member.

According to a second aspect of the invention there is provided a method of inspecting and testing a flue or flue liner which flue comprises a first, upper, end open of the atmosphere and second, lower, end adapted to be connected to an appliance said inspecting and testing method comprising
introducing upper closure means for closing the upper end of the flue into the lower end of the flue and guiding the upper closure means along the flue from the lower end to the upper end,
introducing lower closure means for closing the lower flue into the lower end of the flue,
closing the upper end of the flue using the upper closure means,
closing the lower end of the flue using the lower closure means,
connecting an extractor adapted to produce reduced pressure to the region of the flue between the upper closure means and the lower closure means, and
detecting by means of a sensor whether the flow rate in the flue which is closed and under reduced pressure exceeds a predetermined threshold value.

Each aspect of the invention will now be further described, by way of example, with reference to the accompanying drawings of which
- Fig.1: is a view, partly in section and partly diagrammatic, of an embodiment of a system according to the first aspect of the invention for performing a method according to the second aspect;
- Fig.2: is a section through an upper closure member of the system in Fig. 1;
- Fig.3: is a section through a lower closure member of the system in Fig.1 in which Fig.1 the lower closure member is merely represented diagrammatically, and
- Fig.4: is a view of a mechanical test device for attachment of the upper closure member.

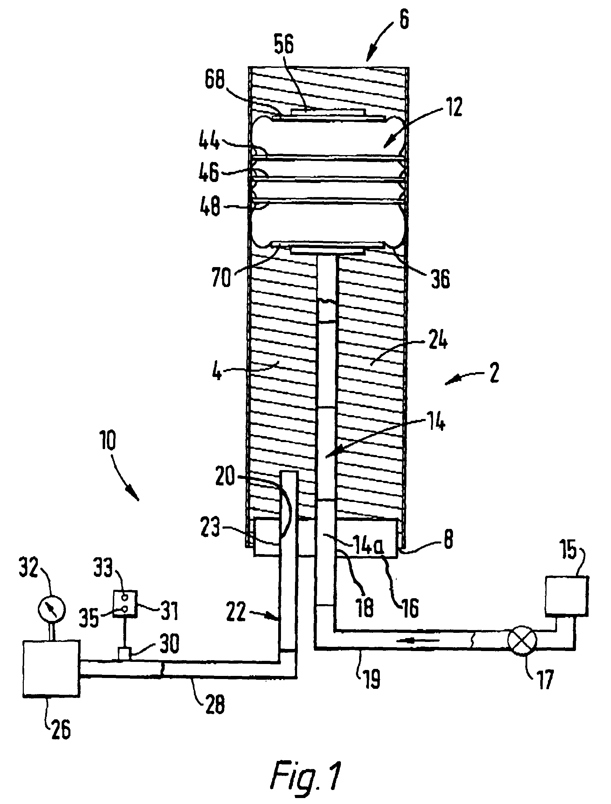

As can be seen from Fig.1, a flue liner test system is shown schematically at 10, and is located within a flue 2, the inner wall of which is lined with a corrugated stainless steel flue liner 4, having an upper end 6 open to the atmosphere and lower end 8 adapted for connection to an appliance . The flue liner test system 10 comprises an inflatable bag 12 (shown inflated in Fig.1) attached to a guide 14 through which air is supplied to inflate the bag 12. The bag 12 is positioned near to the upper end 6 of the flue 2. A lower closure member 16 is located adjacent to the lower end 8 of the flue 2. A lower closure member 16 includes a first aperture 18 and a second aperture 20, each of which extend through the lower closure member 16 so as to provide communication between the interior of the flue 2 and the outside. The first aperture 18 adapted so as to allow the guide 14 to be introduced into the flue 2.

The flue liner test system 10 further comprises means 22 for reducing the pressure in the region 24 of the flue 2 between the bag 12 and the lower closure member 16. The pressure reducing means 22 comprises a pipe 23 and vacuum or extractor pump 26 linked to the region 24 of the flue by a pipe 28 detachably attached to the pipe 23. A flow rate measuring device or meter 30 is included in the pipe 28, and the pump 26 has a pressure gauge 32. The flow meter 30 is connected to indicator means 31 set to indicate when a predetermined threshold flow reading is detected. The indicator means 31 suitably comprises visible indicators, for example a pair of differently coloured light emitting diodes 33 and 35, one of which is illuminated when the flow is below the pre-determined threshold level and other which is illuminated when the flow is above the predetermined threshold level.

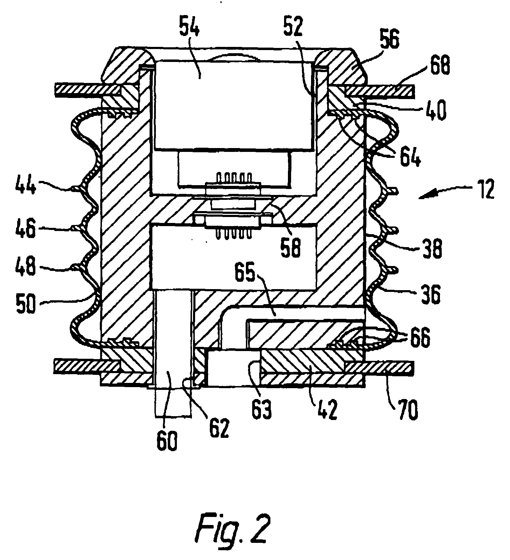

The inflatable bag 12 is shown in more detail in Fig. 2. The bag 12, which may be of an elastic resilient material, is generally cylindrical in shape an comprises an inflatable seal 36 surrounding a housing 38. the inflatable seal 36 extends between an upper retaining plate 40 and a lower retaining plate 42. The upper and lower retaining plates are preferably manufactured from aluminium. A plurality of external circumferential ribs 44, 46 and 48 are provided on the outer wall 50 of the seal 36.

The upper retaining plate 40 is provided with a housing 52 which is adapted to received a camera 54. The camera 54 is secured in the housing 52 by means of a retaining ring 56. LED's (light emitting diodes) (not shown) are mounted close to the camera 53 to illuminate its field of vision. Electrical connections 58, 60 are provided for the camera 54 and the LED's so a cable therefrom extends down through the flue 2 to the lower closure member 16 to pass therethrough permitting, in the case of the camera, images of the interior of the flue liner 4 to be displayed externally of the flue 2.

The lower retaining plate 42 is provided with apertures 62 and 63, air to inflate the bag 12 being passed through aperture 63 to a passage 65, and the electrical cable connection to the camera 54 passes through aperture 62.

A pair of annular concentric ribs 64 are provided at one end of the seal 36 and locate in corresponding grooves in one end of the housing 38, whilst a similar pair of annular ribs 66 at the other end of the seal locate in corresponding grooves in the other end of the housing.

An upper guide ring 68 and lower guide ring 70 project from the upper and lower retaining plates 40, 42 respectively. The upper and lower guide rings 68, 70 are manufactured from plastics material, for example polyethylene.

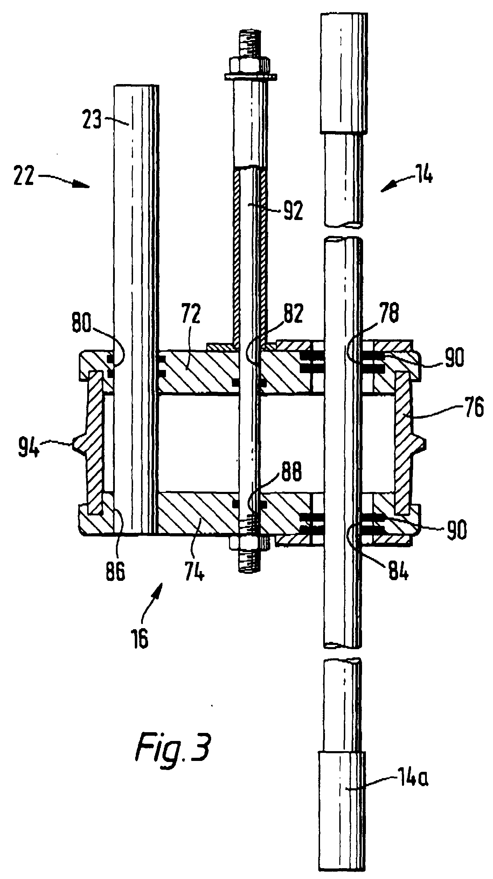

The inspection system 10 comprises a lower closure member 16 which is shown in more detail in Fig.3. An upper flange 72 and lower flange 74 are connected together by means of a ring or annular diaphragm 76 of elastomeric material, for example a rubber. The upper flange 72 is provided with a first aperture 78, a second aperture 80 and a third aperture 82. Corresponding first, second and third apertures 84,86 and 88 are provided in the lower flange 74. The first pair of apertures 78 and 84 co-operate to form the aperture 18 shown in Fig.1 through which the guide 14 is passed. The guide 14 is flexible transversely and is formed of tubes screwed end to end with the upper tube screwed into the aperture 63 and the lowest but one tube screwed to the lowest tube 14a in the closure member 16. The second pair of apertures 80 and 86 co-operate to form the aperture 20 shown in Fig.1 through which the pressure reducing means 22 is passed. Each of the apertures 78,80, and 84 is sealed by means of respective O-rings 90. An adjustable expansion rod 92 extends through the third pair of co-operating apertures 82 and 88 and is adjustable to move the upper flange 72 relative to the lower flange 74 and hence deform the elastomeric diaphragm 76 which tends to expand radially outwardly. The elastomeric diaphragm 76 is provided with a circumferential rib 94, which rib is sized to engage sealingly with the inner wall of the flue liner 4.

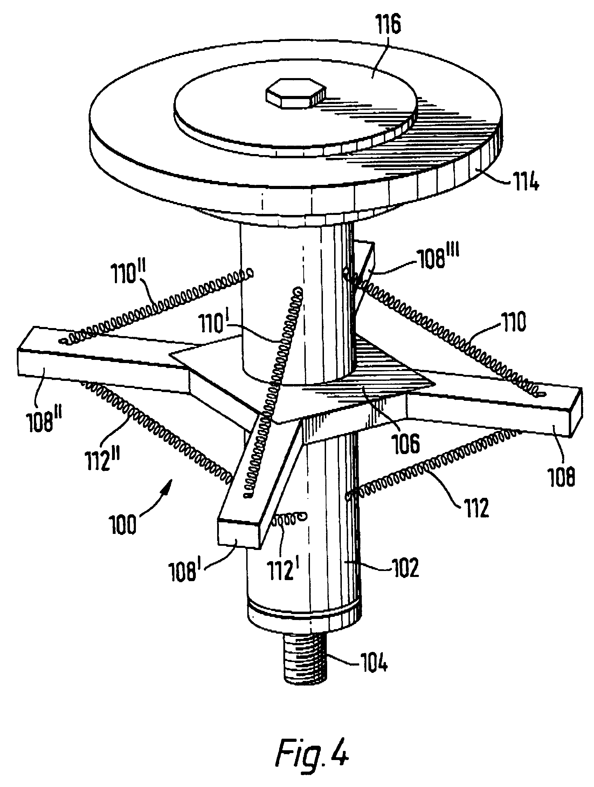

A mechanical inspection device 100 for attachment above the upper closure member is shown in Fig. 4. The mechanical inspection device 100 comprises a central body 102 which is cylindrical in shape. One end of the body 102 is provided with a screw rod 104 by means of which the mechanical inspection device 100 can be attached to the upper end of the upper closure member 12. A mounting plate 106 is secured to the body 102 about halfway along its length; the mounting plate 106 is secured to the body 102 about halfway along its length; the mounting plate 106 is generally square in shape and a flexible finger 108, 108", 108'" is pivotally or flexibly mounted at each of the four corners of the plate 106. Each of these fingers 108, 108', 108", 108'" is tensioned by a pair of tension springs 110, 112, 110' 112' 110", 112", 110'", 112"", one 110, 110', 110", 110"' of each pair of which is located with one end secured to the lower face of the finger 108, 108', 108", 108'" adjacent to the free end thereof and the other end secured to the body 102 below the mounting plate 106. A guide ring 114 mounted on a steel ring 116 is mounted on the upper end of the device 100, remote from the screw rod 104.

In operation, the inspection system is transported to the premises where the flue to be inspected is located, and the inflatable bag 12 is introduced into the flue 2 in its non-inflated state. The bag 12 is guided up the flue 2 by means of the guide 14, the upper and lower guide rings 68, 70 maintaining the bag in the correct orientation relative to the flue 2. As the bag 12 is guided up the flue 2, the mechanical inspection device 100 operates to detect any major defects in the flue liner 4. As the fingers 108, 108", 108", 108'" pass up the flue 2, they tap against the inside of the liner 4 and their progress is monitored by the camera 54, illuminated by the LED's mounted on the bag 12. Any substantial damage to the flue 2 can be identified by a change in response of the fingers 108, 108', 108", 108'" as they pass the damaged ares. The camera 54 also serves to monitor the progress of the bag 12 up the flue 2, and to show to the operator, watching a display linked to the camera 54, that the top of the flue has been reached. The bag 12 is then located at the top of the flue 2 and the lower closure member 16 is then inserted in the lower end of the flue 2.

The spacing between the upper and lower flanges 72, 74 of the lower closure member 16 is then reduced by means of the expansion rod 92, so that the elastomeric diaphragm 76 is deformed and, with its circumferential rib 94 serves to close the lower end of the flue 2.

The bag 12 is then inflated by means of a pump 15, which may be a manual or a foot pump, connected to a releasable one-way valve 17 in a coupling pipe 19 attached to the lower pipe 14a, air from pump 15 passing through the guide 14 and into bag 12. When inflated, the bag 12 closes the upper end of the flute 2. The circumferential ribs 44,46,48 engage in the corrugations of the flue liner 4 to provide effective closing. The internal annular spacers 64, 66 co-operate with the walls of the bag 12 as it inflates to assist the inflated bag 12 in attaining the desired cylindrical shape.

When the bag 12 is inflated, and the lower closure member 16 has been adjusted by means of the expansion rod 92 to close the lower end 8 of the flue 2, the pressure in the region 24 of the flue, which is initially at atmospheric pressure, is reduced by means of the pump 26 until it reaches a steady state. It has been found that with upper and lower closure members 12, 16 of the type described herein located in the flue, and if the pump 26 is operated at a pressure of 0.28kg/sq cm(4psi), then if the flue liner 4 is intact the steady state air extraction flow rate measured by the flow meter 30 is less than 40 litre/min. This is due to some air leakage into the flue liner 4 from atmosphere, especially at the lower closure member 16. If however, the flue liner 4 has damage producing a hole of the order of 2mm in diameter, then the steady state air extraction flow rate under these conditions, as measured by the flow meter 30 is greater than 100 litre/min.

Rather than actually reading the flow from the flow meter 30, a sensor arrangement in the indicator means 31 can be set to activate the two visual indicators 33 and 35 as follows:-
(a) the visual indicator 33 can be a green light can be set to be illuminated when the flow rate is up to 501./min;
(b) the visual indicator 35 can be a red light can be set to be illuminated when the flow rate is over 501./min.

Since it has in practice been found that when there is a 2mm diameter hole, the flow increases from 40 to 100 litres per minute, the threshold level of 501/min allows the detection of holes of the order of 2mm in diameter.

## Claims

1. An inspection system for a flue or a flue liner, which flue comprises a first, upper, end open to the atmosphere and a second, lower, end adapted to be connected to an appliance, said inspection system comprising upper closure means for closing the upper end of the flue, lower closure for closing the lower end of the flue, guiding means for guiding the upper end closing means along the flue from the lower end to the upper end, a connector for connecting an extractor adapted to produce reduced pressure in an internal region of the flue between the upper closure means and the lower closure means, and a sensor for detecting whether the flow rate in the flue which is closed and under reduced pressure exceeds a predetermined threshold value.

2. An inspection system as claimed in claim 1, in which the upper closure means for closing the upper end of the flue comprises an inflatable closure member, which inflatable closure member is guided along the flue from the lower end to the upper end in a non-inflated condition and is inflated when the inflatable closure member is located in its operating position.

3. An inspection system as claimed in claim 2, in which the guiding means for guiding the upper closure means along the flue from the lower end to the upper end thereof further comprises means for allowing the inflatable closure member to be inflated when the inflatable closure member is located in its operating position.

4. An inspection system as claimed in any one of claims 1 to 3 in which the upper closure means has an upper end comprising means for mounting a camera.

5. An inspection system as claimed in any one of claims 1 to 3, or in claim 4 when appended to claim 2, in which the upper closure means comprises an inflatable bag the shape of which when inflated is generally cylindrical, and the outer diameter of said cylinder being such that the inflated bag effectively closes the flue.

6. An inspection system as claimed in claim 5, in which the inflatable bag comprises at least one external circumferential rib which extends around the external circumference of the bag.

7. An inspection system as claimed in claim 6, in which the inflatable bag comprises three external circumferential ribs spaced along its length.

8. An inspection has claimed in any one of claims 5 to 7, in which the inflatable bag comprises one or more internal structural features which co-operate with other structures of the upper closure means during and after inflation of the bag to enhance rigidity of said inflated bag and its ability to close the flue.

9. An inspection system as claimed in any one preceding claim, in which the lower closure means comprises a mechanical expansion unit comprising a ring between pair of rigid flanges interconnected by an expansion rod arrangement operable so that the flanges can be drawn towards each other thereby compressing the ring.

10. An inspection system as claimed in claim 9, in which the compressible ring is formed of elastomeric material.

11. An inspection as claimed to any one preceding claim, in which a mechanical inspection device is mounted above the upper closure member and comprises a central body mounted substantially axially with respect to the upper closure member and from which one or more resiliently mounted flexible fingers project in a plane which is substantially perpendicular with respect to the axis of the upper closure member.

12. An inspection system as claimed in claim 1 in which the mechanical inspection device comprises four resiliently mounted flexible fingers.

13. An inspection system for a flue or flue liner substantially as hereinbefore described with reference to the accompanying drawings.

14. A method of inspecting and testing a flue or flue liner, which flue comprises a first, upper end open to the atmosphere and a second, lower end adapted to the connected to an appliance, said inspecting and testing method comprising
introducing upper closure means for closing the upper end of the flue into the lower end of the flue and guiding the upper closure means along the flue from the lower end to the upper end, introducing lower closure means for closing the lower end of the flue into the lower end of the flue, closing the upper end of the flue using the upper closure means,
closing the lower end of the flue using the lower closure means,
connecting an extractor adapted to produce reduced pressure in an internal region of the flue between the closure means and lower closure, and
detecting by means of a sensor whether the flow rate from the flue which is closed and under reduced pressure exceeds a predetermined threshold value.

15. A method as claimed in claim 1, in which a flue or the liner inspection system as claimed in any one of claims 1 to 13 is used.

16. A method of inspecting and testing a flue or flue liner, said method being substantially as hereinbefore described with reference to the accompanying drawings.
